# EUROPEAN PATENT APPLICATION

(11) **EP 4 521 759 A1**
(43) Date of publication of application: **12.03.2025**
(21) Application number: 23799300.1
(22) Date of filing: 05.05.2023
(51) Int. Cl.: H04N 21/439

(54) **AUDIO EDITING METHOD AND APPARATUS, AND DEVICE AND STORAGE MEDIUM**

(30) Priority: 06.05.2022 CN 202210489421
(71) Applicant: BEIJING BYTEDANCE NETWORK TECHNOLOGY CO., LTD., Beijing 100041 (CN)
(72) Inventor: ZHENG, Weiming, Beijing 100028 (CN); CHU, Shuting, Beijing 100028 (CN); HUANG, Pan, Beijing 100028 (CN); WANG, Jinjin, Beijing 100028 (CN)
(74) Representative: Dentons UK and Middle East LLP
(86) International application number: PCT/CN2023/092387
(87) International publication number: WO 2023/213314

(57) **Abstract**

According to embodiments of the disclosure, a method, an apparatus, a device and storage medium for editing audio are provided. The method includes: presenting text corresponding to audio; in response to detecting a first predetermined input for the text, determining a plurality of text segments of the text based on a first position associated with the first predetermined input; and enabling segmentation editing of the audio based at least in part on the plurality of text segments.

## Description

This application claims priority to Chinese Patent Application No. 202210489421.X, filed with the Chinese Patent Office on May 6, 2022 and entitled "METHOD, APPARATUS, DEVICE AND STORAGE MEDIUM FOR EDITING AUDIO", the entire contents of which are incorporated herein by reference.

### FIELD

Example embodiments of the present disclosure generally relate to the field of audio processing, and in particular, to a method, an apparatus, a device and computer-readable storage medium for editing audio.

### BACKGROUND

Audio data is a common information carrier in daily life, work and social contact. People can disseminate information and content by producing and obtaining audio data. In order to output high-quality audio, it is desirable to perform various editing operations on the audio data, such as speed change, noise reduction, volume and timbre adjustment, and the like. In some cases, it is further desirable to enable diversified and differential editing of different parts of an audio segment to enrich audiovisual experience.

### SUMMARY

According to example embodiments of the present disclosure, a solution for audio editing is provided to assist a user in segmenting and editing audio based on text.

In a first aspect of the present disclosure, a method for editing audio is provided. The method comprises: presenting text corresponding to an audio; in response to detecting a first predetermined input for the text, determining a plurality of text segments of the text based on a first position associated with the first predetermined input; and enabling segmentation editing of the audio based at least in part on the plurality of text segments.

In a second aspect of the present disclosure, an apparatus for editing audio is provided. The apparatus comprises: a text presentation module configured for presenting text corresponding to the audio; a segment determination module configured for, in response to detecting a first predetermined input for the text, determining a plurality of text segments of the text based on a first position associated with the first predetermined input; and a segment editing module configured for enabling segmentation editing of the audio based at least in part on the plurality of text segments.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the electronic device to perform the method according to the first aspect.

In a fourth aspect of the present disclosure, a computer-readable storage medium is provided. A computer program is stored on the medium, and the computer program, when executed by a processor, implements the method according to the first aspect.

It should be understood that the content described in this Summary is not intended to identify key features or essential features of the implementations of the present disclosure, nor is it intended to limit the scope of the present disclosure. Other features disclosed herein will become easily understandable through the following description.

### BRIEF DESCRIPTION OF THE DRAWINGS

The above and other features, advantages, and aspects of respective embodiments of the present disclosure will become more apparent from the following detailed description with reference to the accompanying drawings. The same or similar reference numerals represent the same or similar elements throughout the figures, where:
FIG. 1 illustrates a schematic diagram of an example environment in which embodiments of the present disclosure can be implemented;
FIG. 2 illustrates a flowchart of a process for editing audio according to some embodiments of the present disclosure;
FIGs. 3A to 3I illustrate schematic diagrams of interaction examples of a user interface for editing audio according to some embodiments of the present disclosure;
FIGs. 4A and 4B illustrate schematic diagrams of interaction examples of a user interface for editing audio according to some embodiments of the present disclosure;
FIG. 5 illustrates a flowchart of a process for editing audio according to some embodiments of the present disclosure;
FIGs. 6A to 6E illustrate schematic diagrams of interaction examples of a user interface for editing audio according to some embodiments of the present disclosure;
FIG. 7 illustrates a block diagram of an apparatus for editing audio according to some embodiments of the present disclosure; and
FIG. 8 illustrates a block diagram of a device capable of implementing various embodiments of the present disclosure.

### DETAILED DESCRIPTION

The embodiments of the present disclosure will be described in more detail with reference to the accompanying drawings, in which some embodiments of the present disclosure have been illustrated. However, it should be understood that the present disclosure can be implemented in various manners, and thus should not be construed to be limited to embodiments disclosed herein. On the contrary, those embodiments are provided for the thorough and complete understanding of the present disclosure. It should be understood that the drawings and embodiments of the present disclosure are only used for illustration, rather than limiting the protection scope of the present disclosure.

As used herein, the term "comprise" and its variants are to be read as open terms that mean "include, but is not limited to." The term "based on" is to be read as "based at least in part on." The term "one embodiment" or "the embodiment" is to be read as "at least one embodiment." The term "some embodiments" is to be read as "at least some embodiments." Other definitions, explicit and implicit, might be further included below.

It is to be understood that the data involved in this technical solution (including but not limited to the data itself, data acquisition or use) should comply with the requirements of corresponding laws and regulations and relevant provisions.

It is to be understood that, before applying the technical solutions disclosed in respective embodiments of the present disclosure, the user should be informed of the type, scope of use, and use scenario of the personal information involved in the present disclosure in an appropriate manner in accordance with relevant laws and regulations, and user authorization should be obtained.

For example, in response to receiving an active request from the user, prompt information is sent to the user to explicitly inform the user that the requested operation would acquire and use the user's personal information. Therefore, according to the prompt information, the user may decide on his/her own whether to provide the personal information to the software or hardware, such as electronic devices, applications, servers, or storage media that perform operations of the technical solutions of the present disclosure.

As an optional but non-limiting implementation, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

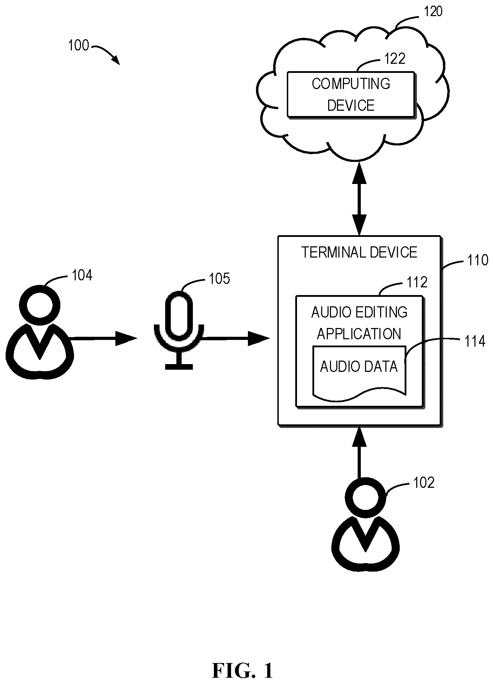

FIG. 1 illustrates a schematic diagram of an example environment 100 in which embodiments of the present disclosure can be implemented. In the example environment 100, an application 112 is installed in a terminal device 110 for editing audio 114. For example, the application 112 may edit the audio 114 based on an operation of a user 102. The application 112 may be an audio and video editing application or a content sharing application having an audio and video editing function, which can provide the user 102 with services related to multimedia content consumption, including creation (e.g., capturing and/or editing) and distribution of multimedia content, etc. The audio 114 to be edited herein may be in any audio format and may have any suitable duration. As an example, the audio 114 may be a podcast, audio corresponding to a short video, a radio drama, an audiobook, a recording of a meeting or interview, an audio course, a recorded note, and the like.

In some embodiments, the audio 114 may be captured by an audio capture device 105 (e.g., a device with a microphone) and provided to the application 112 for editing. For example, the audio capture device 105 may capture audio from at least a user 104. In some embodiments, the application 112 may provide audio recording functionality for recording the audio 114 captured via the audio capture device 105. In some embodiments, the audio 114 edited by the application 112 may be from any other data source, e.g., downloaded or received from other devices. Embodiments of the present disclosure are not limited in this regard.

It may be understood that although the user 102 performing the editing operation on the audio 114 and the user 104 outputting the audio 114 are shown, these users may be the same user, which is not limited herein. It may also be understood that although shown as separate devices, the audio capture device 105 may be integrated with a terminal device 110. In other implementations, the audio capture device 105 may be communicatively connected to the terminal device 110 in other manners to provide the captured audio 114.

The terminal device 110 may be any type of mobile terminal, fixed terminal, or portable terminal, including a mobile handset, a desktop computer, a laptop computer, a notebook computer, a netbook computer, a tablet computer, a media computer, a multimedia tablet, a personal communication systems (PCS) device, a personal navigation device, a personal digital assistant (PDA), an audio/video player, a digital camera/camcorder, a positioning device, a television receiver, a radio broadcast receiver, an e-book device, a gaming device, or any combination of the foregoing, including accessories and peripherals of these devices or any combination thereof. In some embodiments, the terminal device 110 can also support any type of interface for a user (such as a "wearable" circuit).

In some embodiments, the terminal device 110 may communicate with a remote computing device 122 to edit and process the audio data 114. For example, the computing device 122 may provide storage functions, voice recognition, specific analysis tasks, and the like on the audio data 114 to extend storage and processing capabilities of the terminal device 110. The computing device 122 may be various types of computing systems/servers capable of providing computing capabilities, including but not limited to a mainframe, an edge computing node, a computing device in a cloud environment, and the like. In the example shown in FIG. 1, computing device 122 may be located in a cloud environment 120.

It should be understood that the structure and functions of the environment 100 are described for exemplary purposes only and do not imply any limitation on the scope of the present disclosure. For example, the terminal device 110 may not communicate with the remote computing device 122. As another example, the user 104 and the audio capture device 105 may also be omitted from the environment 100, etc.

In a traditional audio editing scenario, limited by factors such as a recording device and environmental noise, or for the purpose of enriching an audiovisual experience, a user may need to segment audio into audio segments for editing locally, such as volume adjustment, speed adjustment (for example, speed change), and the like. The waveform diagram of audio may be used to characterize changes in the audio data over time. However, the user cannot know specific content of each time unit (for example, a moment or a time period) from the waveform diagram, and it is difficult to directly locate an audio segment that needs to be edited from the waveform diagram. A straightforward approach is to play the whole audio segment, and the user manually records the time unit corresponding to the audio segment to be edited and then edits segment by segment. Sometimes the user needs to play the audio repeatedly to determine the time unit of the audio segment. Obviously, this approach greatly reduces editing efficiency, increases time cost, and has poor accuracy of manual locating.

With the development of speech recognition technology, natural speech can be converted into text, such as words. In particular, with automatic speech recognition (ASR) technology, audio may be converted to corresponding text even in real time as the audio is recorded. In this way, the user can intuitively know the specific content of each audio segment based on the text. If local editing of audio can be achieved by means of text, the audio editing process will be greatly simplified.

Embodiments of the present disclosure provide a solution for editing audio. In this solution, audio is converted into corresponding text, and segmentation editing of the audio may be enabled based on segmentation of the text by establishing an association between an audio timestamp and a presentation location of the text in a user interface. For example, a user may edit a corresponding portion of the audio, rather than all audio, by manipulating a text segment. In some cases, the audio timestamp may be accurate to a word or phrase level. Therefore, the audio segment can be quickly and accurately located and edited, the editing efficiency is remarkably improved, and the time cost of editing the audio is saved. In addition, this solution can simplify an audio editing process, and reduce requirements on a recording environment, a recording device, and an audio editing tool.

Embodiments will be described below with reference to example states of several user interfaces (UIs). The controls included in these UIs may be implemented with any currently known or future developed UI elements and techniques. In addition, the type, form, operation mode, layout in the UI, arrangement and the like of these controls are all illustrative and are not intended to limit the scope of the present disclosure in any form.

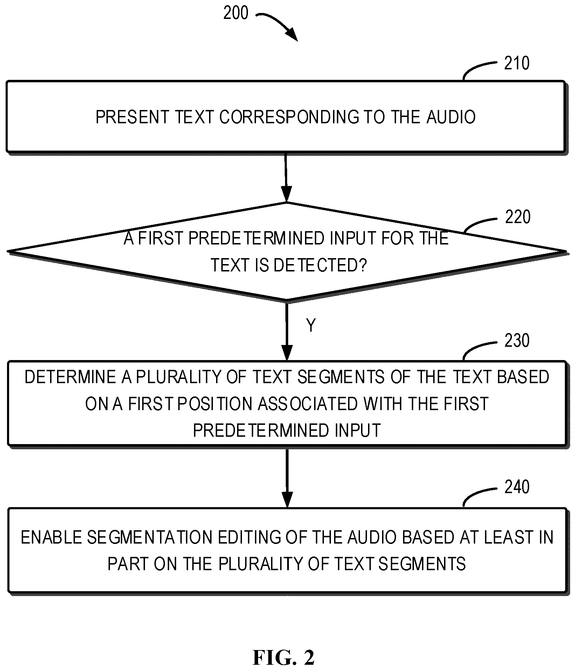

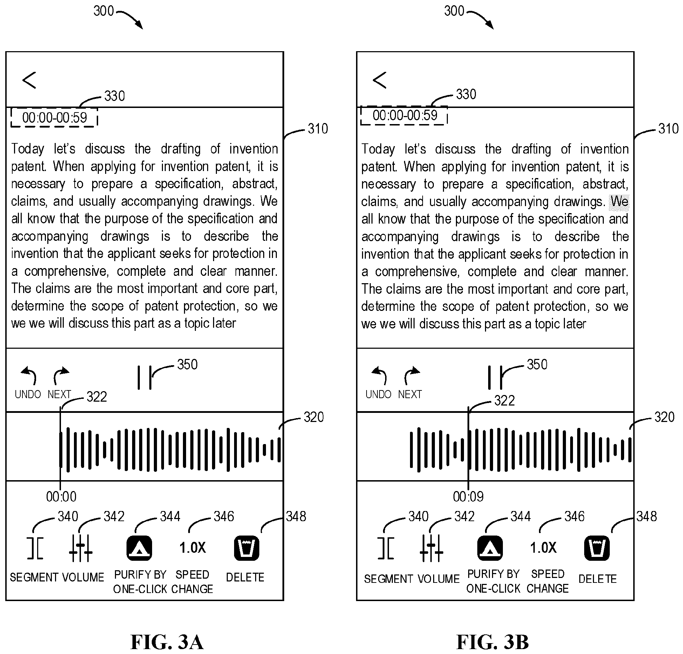

FIG. 2 illustrates a flowchart of a process 200 for editing audio according to some embodiments of the present disclosure. The process 200 may be implemented at the terminal device 110 or, of course, any suitable device. For ease of discussion, the process 200 will be described with reference to the environment 100 of FIG. 1 in conjunction with FIGs. 3A to 3I.

At block 210, the terminal device 110 presents text corresponding to the audio 114. In some embodiments, the text may be presented in a user interface of the application 112. Referring now to FIG. 3A, which illustrates a schematic diagram of a user interface 300 for editing audio.

In the example of FIG. 3A, a duration of the audio 114 is one minute (i.e., from 00: 00 to 00: 59), and the text corresponding to the audio 114 is recognized as "Today, let's talk about drafting of application files for invention patent. When applying for an invention patent, it is necessary to prepare a specification, abstract, claims, and usually accompanying drawings. We all know that the specification and accompanying drawings serve to describe the invention to be protected by the applicant in a comprehensive, complete and clear manner. The claims are the most important and core part, and determine the scope of patent protection, so we we we will discuss this part as a topic later." It should be understood that for the purpose of illustration, acoustic wave characterization and text of specific audio are presented in the drawings of the present disclosure, but this does not constitute any limitation on the embodiments of the present disclosure.

In the user interface 300 shown in FIG. 3A, text corresponding to the audio 114 is presented in an area 310. The user interface 300 may also present audio information associated with the audio 114 (also referred to as associated information of the audio 114) including, but not limited to, time length information 330 and an acoustic wave representation 320 (e.g., a waveform diagram) of the audio 114. As shown in FIG. 3A, a locator 322 may be used to indicate a location in the acoustic wave representation 320 corresponding to the currently played audio unit. As an example, when playing audio, a currently played text unit (e.g., a word, phrase, or punctuation) may be highlighted over time, and a waveform corresponding to the text unit on the waveform diagram is indicated with the locator 322. The manner of highlighting may include highlighting the text unit, e.g., rendering the background of the text unit with a bright color, changing the color of the text unit, adding underlines or dots under the text unit for indication, etc. Of course, other highlighting manners are also applicable to the embodiments of the present disclosure, and therefore, the scope of the present disclosure is not limited in this respect. In other embodiments, the user interface 300 may not present one or more of the audio information or may present other information in addition to the audio information.

The user interface 300 may also provide one or more editing controls for editing audio. A "segment" control 340, a "volume adjustment" control 342, a "purify by one-click" control 344, a "speed change" control 346, and a "delete" control 348 are schematically shown in FIG. 3A. Of course, in practical applications, more or fewer editing controls may be provided as required.

The "segment" control 340 is configured to segment the text corresponding to the audio 114 into a plurality of text segments for segmentation editing of the audio. As used herein, the term "segmentation editing" or "segmental editing" refers to editing a corresponding portion of audio, such as an audio segment, by manipulating a text segment, rather than editing the entire audio. The text segments corresponding to the audio segments may be independently presented in the area 310, and global editing for the respective audio segments may be implemented based on selection of the corresponding text segments. For example, volume adjustment, purify by one-click, speed change or deletion may be performed for the selected audio segment, which will be described in detail below.

The "purify by one-click" control 344 is used to delete words or phrases that are not expected to appear in the audio 114 or an audio segment of the audio 114. Such words or phrases may be referred to herein as "invalid characters," "invalid words," "words with nonsense" or "empty words" and the like, and may be text units of any size, such as a single character, word, or phrase, which may depend on the natural language identified. In some embodiments, the word or phrase that is not expected to appear may be a word or phrase that is meaningless or repetitive in the content of the audio 114, for example, a modal particle such as "Ah" and "Eh" appearing in oral expression, or a pet phrase such as "this" and "that". In some embodiments, an undesired word or phrase may be a sensitive word or an offending word. Sensitive words and offending words in different application scenarios may be different, which may be determined and set as needed.

The "volume adjustment" control 342 is used to adjust the volume of the audio 114 or audio segments of the audio 114, including increasing the volume, decreasing the volume, and so forth. The "speed change" control 346 is used to adjust the speed of the audio 114 or audio segments of the audio 114, including acceleration, deceleration, and the like. The "delete" control 348 is used to delete the audio 114 or audio segments of the audio 114. The user interface 300 also presents one of a "pause" control 350 and a "play" control. Specifically, activation of the "pause" control 350 may stop playing the audio 114 from the corresponding location, while deactivation of the "pause" control 350 may activate the "play" control (shown as a "play" control 352 in the figure) to play the audio 114 from the corresponding location.

Herein, the enabling of a function may include, for example, activating a user interface control of the corresponding function, and the disabling of a function may include deactivating or graying the corresponding control to make it inoperable.

In an embodiment of the present disclosure, the corresponding text recognized from the audio 114 is used to assist in editing the audio 114. In some embodiments, text corresponding to the audio 114 may be recognized using ASR techniques. The speech recognition may be performed at the terminal device 110. In other embodiments, speech recognition may be performed by a remote computing device, such as the computing device 122 in the environment 100. For example, the user 104 may upload the recorded audio to the computing device 122, or the user 102 may upload the audio 114 to the computing device 122 after obtaining the audio 114, and the terminal device 110 may receive the recognized text from the computing device 122.

At block 220, the terminal device 110 detects a first predetermined input for the text. In some embodiments, the predetermined input for the text may correspond to a selection of a text unit or a position in the text within the user interface 300. As an example, the manner of the first predetermined input may include, but is not limited to, long press, single click, double click, and the like. For example, the predetermined input may be a click or tap for a text unit in the text or a position between text units.

In other embodiments, the first predetermined input may include activation of the "pause" control 350. For example, in response to the "pause" control 350 being activated when the audio 114 is played to the first position, the terminal device 110 detects the first predetermined input.

In response to detecting the first predetermined input for the text, at block 230, the terminal device 110 determines a plurality of text segments of the text based on a first position associated with the first predetermined input. As an example, the plurality of text segments includes at least a first text segment and a second text segment. Herein, the first position may be a relative position in the text, or may be a position on the user interface 300, which may be characterized by coordinate information.

Referring to FIG. 3B, a schematic diagram of an interaction example of a user interface 300 for editing audio is shown. In the example of FIG. 3B, a first predetermined input for the text unit - the character "w" in the text is detected. Accordingly, the first position associated with the first predetermined input, i.e., the background of the text unit "We", may be highlighted in the user interface 300. Additionally, the locator 322 may be located at a waveform of an audio unit in the acoustic wave representation 320 corresponding to the first position, e.g., corresponding to the waveform at 00: 09.

In some embodiments, the text may be divided into a plurality of text segments relative to the first position. For example, the part of the text before the first position, "Today the preparation of documents for patent applications for inventions will be discussed. When applying for an invention patent, it is necessary to prepare a specification, abstract, claims, and usually accompanying drawings" may be a first text segment; the part after the first position, "We all know that the specification and accompanying drawings serve to describe the invention to be protected by the applicant in a comprehensive, complete and clear manner. The claims are the most important and core part, determining the scope of patent protection, so we we we will explore this part as a topic later" may be a second text segment.

However, it should be understood that the terms "first", "second", and the like are used herein merely to distinguish between different elements, objects, targets, and units, and do not imply an order or difference of the elements, objects, targets, units in time, space, and priorities. For example, in other embodiments, the part of the text before the first position may be the second text segment, and the part after the first position may be the first text segment.

Still with reference to FIG. 2, at block 240, the terminal device 110 enables segmentation editing of the audio 114 based at least in part on the plurality of text segments. In an embodiment of the present disclosure, the term "enabling" includes activating an element or a control of a corresponding function on the user interface.

As an example implementation of block 240, the terminal device 110 may present the first text segment on the user interface 300, and record an association between presentation positions of text units in the first text segment on the user interface 300 and timestamps of corresponding audio units in the audio 114. Herein, the presentation position may be a relative position of each text unit in the first text segment in the text, or may be characterized using coordinate information in the user interface 300.

In some embodiments, the terminal device 110 determines a first text unit corresponding to the first position in the first text segment. Based on the presentation position of the first text unit and the recorded association, the terminal device 110 may determine a first timestamp in the audio for the first audio unit corresponding to the first text unit. The terminal device 110 may perform segmentation editing on the audio 114 according to the first timestamp.

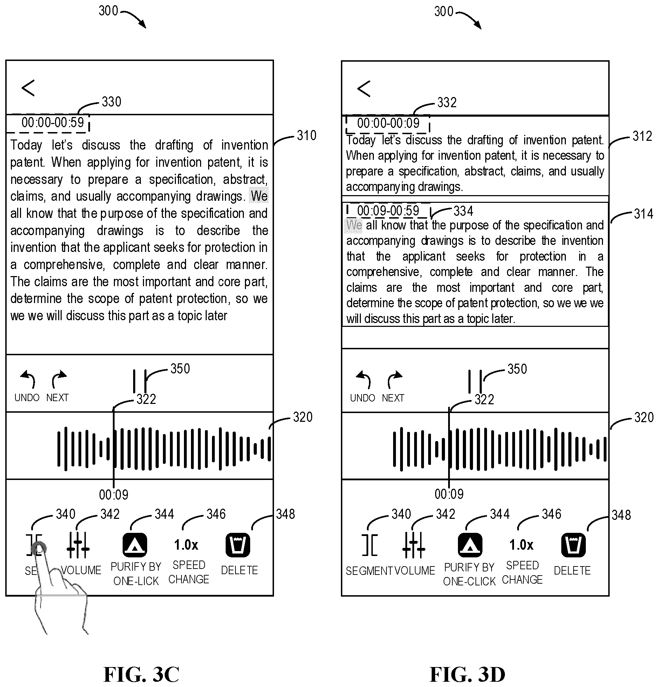

In some embodiments, the segmentation editing of the audio 114 may be triggered by a user input. Referring now to FIG. 3C, a schematic diagram of an example user input for segmentation editing is shown. As shown in FIG. 3C, the user may enable segmentation editing of the audio 114 by clicking or tapping on a button of the "segment" control 340. For illustrative purposes, the user input based on touch gestures is shown in FIG. 3C and some subsequent embodiments and figures. However, it should be understood that, depending on capabilities of the terminal device 110, there may be other ways to receive the user input, such as mouse selection, voice control, and the like. The scope of the present disclosure is not limited in this regard.

In other embodiments, the segment editing of the audio 114 may also be triggered by the first predetermined input. For example, in response to detecting that the first predetermined input is a long press for the first position, the terminal device 110 may directly enable an editing function for at least one audio segment of the audio 114 after determining the plurality of text segments, without the user input for the "segment" control 340.

The terminal device 110 may present the plurality of text segments of the text in the independent area respectively. In some embodiments, the terminal device 110 may independently present a first text segment of the plurality of text segments in a first area of the user interface 300, where the first text segment corresponds to a first audio segment in the audio 114. Similarly, a second text segment may be independently presented in a second area of the user interface 300, where the second text segment corresponds to a second audio segment in the audio 114. As shown in FIG. 3D, the first text segment and the second text segment are independently presented in a first area 312 and a second area 314 of the user interface 300. In some embodiments, the first area 312 and the second area 314 may adopt various presentation styles, including but not limited to cards, bubbles, windows, and the like.

Additionally, or alternatively, the time length information of the corresponding audio segment may also be presented in an independent area. As an example, time length information 332 for the first audio segment is presented in the first area 312, and time length information 334 for the second audio segment is presented in the second area 314.

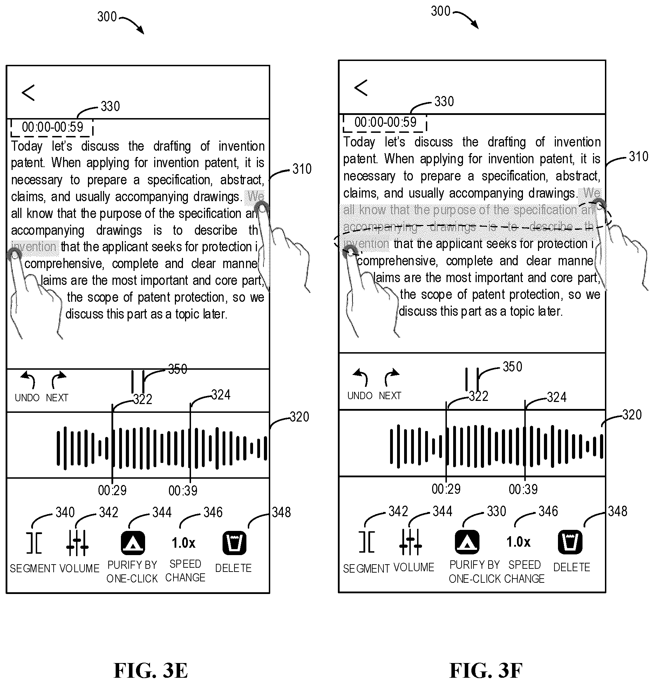

Alternative implementations of blocks 220 through 240 in the process 200 are described in detail below in conjunction with FIGs. 3E to 3G. In addition to the selection of a single position or text unit in the text discussed above, the predetermined input for the text may correspond to the selection of multiple consecutive text units in the text within the user interface 300.

In some embodiments, in response to detecting a second predetermined input in addition to the first predetermined input, the terminal device 110 determines a first text segment, a second text segment, and a third text segment of the text based on the first position and a second position associated with the second predetermined input, where the second text segment may be between the first text segment and the third text segment and defined by the first position and the second position.

As an example, the terminal device 110 may detect the second predetermined input within a predetermined period (for example, within several seconds) after detecting the first predetermined input. If the terminal device 110 detects the second predetermined input within the predetermined period, the first position and the second position may be used to determine a plurality of text segments of the text. As shown in FIG. 3E, in addition to the first predetermined input for the text unit "we", the terminal device 110 further detects the second predetermined input for the text unit "invention". Accordingly, the first position and the second position may be highlighted in the user interface 300.

In some embodiments, the selection of the plurality of consecutive text units in the text may include a long-press and drag gesture or the like. As shown in FIG. 3F, the first predetermined input corresponds to long pressing and dragging at the first position, and the second predetermined input corresponds to releasing the long pressing state at the second position. In this way, consecutive text units between the first position and the second position in the text may be selected. Accordingly, the selected consecutive text units may be highlighted in the user interface 300.

Like the definition of the first position, the second position may be a relative position of the text unit in the text, or may be represented by coordinate information in the user interface 300. In the examples of FIG. 3E and FIG. 3F, the terminal device 110 may divide, based on the first position and the second position, the part before the first position, "Today the preparation of documents for patent applications for inventions will be discussed. When applying for an invention patent, it is necessary to prepare a specification, abstract, claims, and usually accompanying drawings" as the first text segment, divide the part after the first position and before the second position "We all know that the specification and accompanying drawings serve to describe the invention to be protected by the applicant in a comprehensive, complete and clear manner" as the second text segment, and divide the part after the second position, that is, "The claims are the most important and core part, determining the scope of patent protection, so we we we will explore this part as a topic later" as the third text segment.

Additionally, or alternatively, where the first predetermined input and the second predetermined input are detected, the locator 322 may be located at a waveform of an audio unit corresponding to the first position in the acoustic wave representation 320, and the locator 324 may be located at a waveform of an audio unit corresponding to the second position in the acoustic wave representation 320.

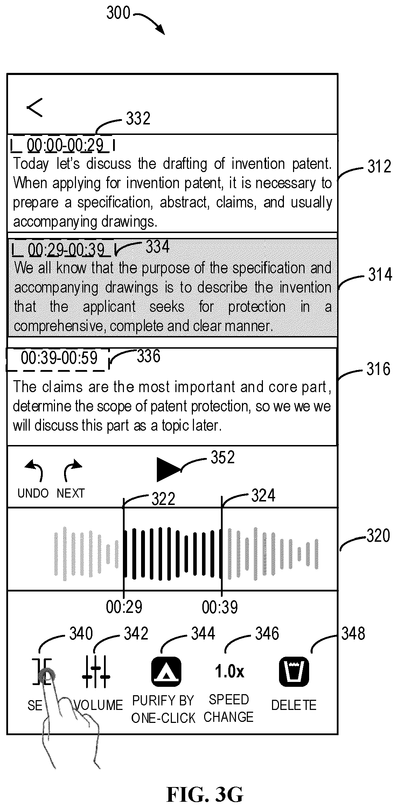

FIG. 3G illustrates a schematic diagram of an interaction example for the user interface 300 shown in FIGs. 3E to 3F according to some embodiments of the present disclosure. As shown in FIG. 3G. The user may trigger segmentation editing of the audio 114 by clicking or tapping on a button of the "segment" control 340. In the example of FIG. 3G, the terminal device 110 may present the first text segment, the second text segment, and the third text segment in separate areas of the user interface 300, for example, the first area 312, the second area 314, and the third area 316. As described above, the separate areas may adopt various presentation styles, including but not limited to cards, bubbles, windows, and the like.

Additionally, or alternatively, the time length information of the corresponding audio segment may also be presented in the independent area. As an example, time length information 332 of a first audio segment is presented in the first area 312, time length information 334 of a second audio segment is presented in the second area 314, and time length information 336 of a third audio segment is presented in the third area 316.

Additionally, or alternatively, in some embodiments, after a plurality of text segments are determined, the "pause" control 350 may be activated and the user interface 300 may present a button of the "play" control 352.

After the segmentation editing is enabled, global editing may be performed on one or more audio segments of the audio 114. For example, the terminal device 110 may edit the corresponding audio segment based on input to the independent area.

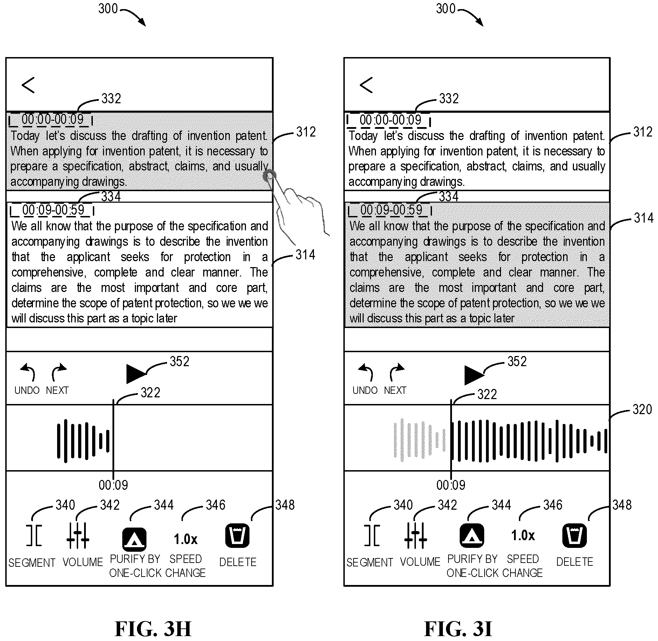

Taking the first area 312 as an example, in some embodiments, the terminal device 110 may edit the first audio segment based on input for the first area 312. The input to the first area 312 may include a selection of the first area 312. FIG. 3H illustrates a schematic diagram of an interaction example for the user interface 300 shown in FIG. 3D according to some embodiments of the present disclosure. As shown in FIG. 3H, a selection of the first area 312 may be implemented by the user clicking on the first area 312.

In some embodiments, in response to receiving the selection of the first area 312, the terminal device 110 may present an acoustic wave representation corresponding to the first audio segment. As shown in FIG. 3H, after receiving the first area 312, the terminal device 110 only presents the acoustic wave representation 322 corresponding to the first audio segment. Alternatively, in this case, the terminal device 110 may also differentially present acoustic wave representations respectively corresponding to the first audio segment and the second audio segment. For example, the acoustic wave representation corresponding to the first audio segment is highlighted, and the acoustic wave representation corresponding to the second audio segment is faded.

In some embodiments, in response to receiving the selection of the first area 312, the terminal device 110 enables an editing function for the first audio segment. In the example shown in FIG. 3H, in a case where the first area 312 is selected, the first area 312 may present a selected state. The edit controls 340 through 348 are operable by the user for editing the first audio segment, wherein the "volume adjustment" control 342, the "purify by one-click" control 344, the "speed change" function 346, and the "delete" control 348 are operable to globally edit the first audio segment. The "segment" control 340 is operable to further divide the first text segment into a plurality of sub-segments and enable segmentation editing of the first audio segment.

Alternatively, in some embodiments, in response to the determination of the plurality of text segments, the terminal device 110 may directly enable an editing function for at least one of the plurality of audio segments (for example, the first audio segment and/or the second audio segment described above) without being triggered by user input or selection of a certain area. This may depend, for example, on the settings of the application 112, and such settings are allowed to be modified by the user in some embodiments.

In the example shown in FIG. 3I, the editing function for the second audio segment is enabled after the plurality of text segments are determined. When the editing function for one audio segment (e.g., the second audio segment) is enabled, the corresponding presentation area (e.g., the second area 314) may be presented in a selected state. While acoustic wave representations corresponding to other audio segments (e.g., the first audio segment) are faded out for presentation.

Referring back to FIG. 3G, FIG. 3G illustrates a schematic diagram in which the terminal device 110 directly enables an editing function for a specific audio segment without being based on input or selection. As shown in FIG. 3G, the editing function for the second audio segment is enabled after the plurality of text segments are determined. Additionally, or alternatively, the second area 314 may be presented in a selected state, and the user interface 300 also presents an acoustic wave representation corresponding to the second audio segment, while both the acoustic wave representation 322 corresponding to the first audio segment and the acoustic wave representation 324 corresponding to the third audio segment are faded.

Additionally or alternatively, in response to detecting the predetermined input for the text, the terminal device 110 may determine whether the position associated with the predetermined input is an inseparable position in the text. As an example, an inseparable position in text may include a start position, an end position in the text, a position in a single text unit (e.g., an English word), and so forth. If the position associated with the predetermined input is an inseparable position in the text, a plurality of text segments of the text might not be determined based on the position, and therefore, the audio 114 may not be edited in segments. In this case, the terminal device 110 may explicitly or implicitly prompt the user for the determination result.

In some embodiments, in response to detecting the third predetermined input and determining that the third position associated with the third predetermined input is an inseparable position in the text, at least one of the following operations is performed: presenting a prompt that the text cannot be divided, and disabling segmentation editing of the audio.

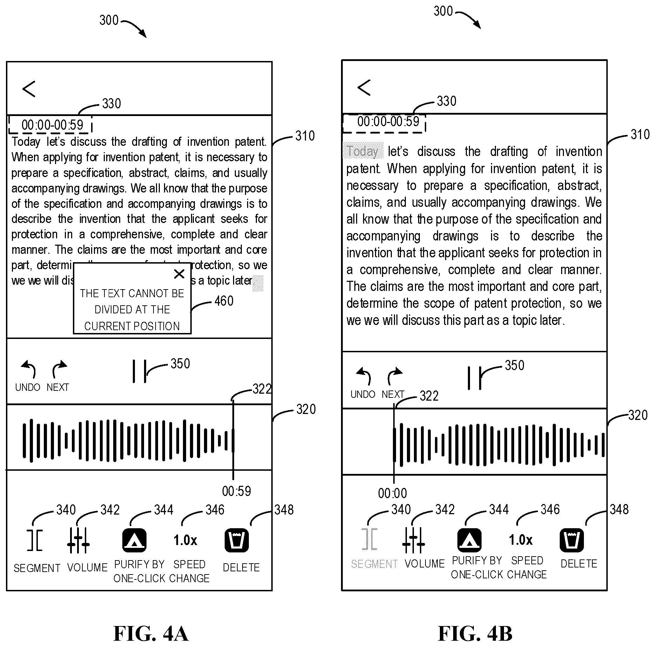

Referring to FIGs. 4A and 4B, a schematic diagram of an interaction example of a user interface 300 for editing audio is shown. In the example of FIG. 4A, the third position associated with the third predetermined input is an end position of the text, and the terminal device 110 explicitly presents a prompt that the text cannot be divided in the user interface 300. As shown in FIG. 4A, a pop-up window 460 in the user interface 300 may present prompt information in a text manner. In the example of FIG. 4B, the third position associated with the third predetermined input is the start position of the text, and the terminal device 110 does not present an explicit prompt in the user interface 300, but prompts the user by deactivating or graying the "segment" control 340. Regardless of explicit prompt or implicit prompt, the user can be guided to change the position of the divided text.

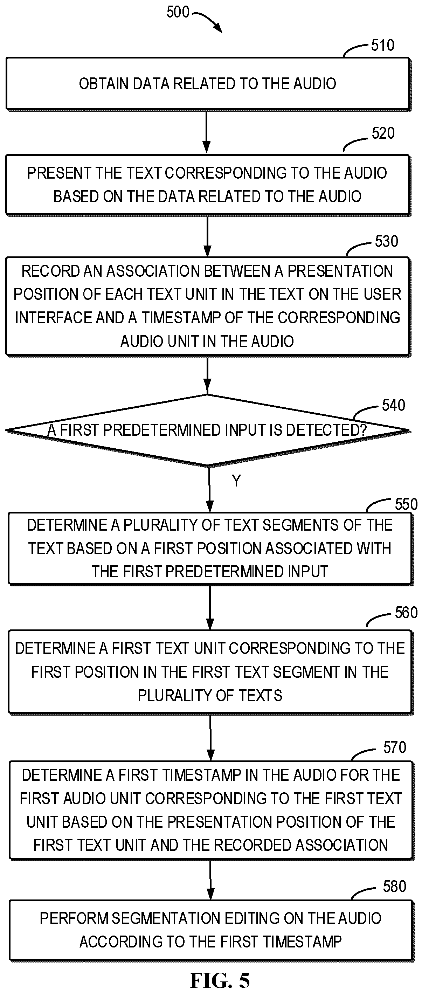

FIG. 5 illustrates a flowchart of a process for editing audio according to some embodiments of the present disclosure. A process 500 may be implemented at the terminal device 110 or, of course, any suitable device. For ease of discussion, the process 500 will be described with reference to the environment 100 of FIG. 1 in conjunction with FIGs. 3A to 3I.

At block 510, the terminal device 110 obtains data related to the audio 114. As an example, the data related to the audio 114 may be obtained via speech recognition, e.g., ASR techniques. In some embodiments, speech recognition may be performed at the terminal device 110. Alternatively, the terminal device 110 may also obtain the data related to the audio 114 from the remote computing device 122.

In some example embodiments, the data related to the audio 114 includes at least respective text objects (e.g., one or more text units) in the text corresponding to the audio 114 and corresponding timestamps in the audio 114.

In some example embodiments, each text object and corresponding timestamp has an index. The index may be added by the terminal device 110 after obtaining the data related to the audio 114, or may be used as a part of the data related to the audio 114. The data related to the audio 114 may take various forms or data structures. As an example, the data related to audio 114 may include a data list.

At block 520, the terminal device 110 presents the text corresponding to the audio 114 based on the data related to the audio 114. For example, as shown in FIG. 3A, the terminal device 110 may present the text corresponding to the audio 114 in the user interface 300 based on the data related to the audio 114.

At block 530, the terminal device 110 records an association between a presentation position of each text unit in the text on the user interface 300 and a timestamp of the corresponding audio unit in the audio 114. In some embodiments, the presentation position may be a relative position of each text unit in the text. In other embodiments, the presentation position may be characterized with coordinate information in the user interface 300.

At block 540, the terminal device 110 detects a first predetermined input for text. In some embodiments, the first predetermined input may correspond to a selection of a position or text unit in the text within the user interface 300. As an example, the first predetermined input manner may include, but is not limited to, long press, single click, double click, and the like. For example, the predetermined input may be a click or tap for a text unit in the text or a position between text units.

In other embodiments, the first predetermined input for the text may also correspond to a selection of a plurality of consecutive text units in the text within the user interface 300. As an example, the manner of the first predetermined input may include, but is not limited to, a drag gesture in a long-press state, as described in connection with FIG. 3F.

In further embodiments, the first predetermined input may include activation of the "pause" control 350. For example, in response to the "pause" control 350 being activated when the audio 114 is played to the first position, the terminal device 110 determines that the first predetermined input is detected.

In response to detecting the first predetermined input for the text, at block 550, the terminal device 110 determines a plurality of text segments of the text based on a first position associated with the first predetermined input. In some embodiments, the plurality of text segments includes at least a first text segment and a second text segment.

As described above, the association between the presentation position of each text unit in the first text segment on the user interface and the timestamp of each corresponding audio unit in the audio 114 is recorded. At block 560, the terminal device 110 determines a first text unit corresponding to the first position in the first text segment in the plurality of texts.

At block 570, the terminal device 110 determines a first timestamp in the audio 114 for the first audio unit corresponding to the first text unit based on the presentation position of the first text unit and the recorded association. In some embodiments, the terminal device 110 may determine the index associated with the first text unit based on the presentation position of the first text unit and the recorded association. The terminal device 110 further searches the data list based on the index, to determine the first timestamp corresponding to the first text unit. In this manner, precise locating may be performed in the data related to the audio 114.

At block 580, the terminal device 110 performs segmentation editing on the audio 114 according to the first timestamp. In some embodiments, the terminal device 110 segments the data related to the audio 114 based on the first timestamp.

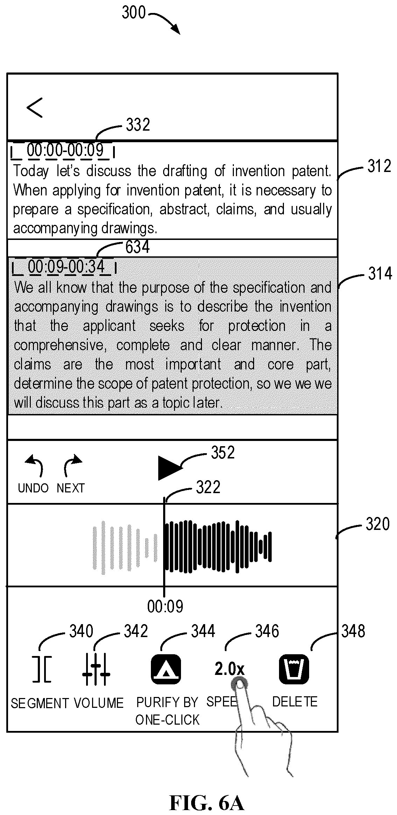

An interaction example of a user interface according to some embodiments of the present disclosure will be described below in conjunction with FIGs. 6A to 6E. As previously described, the user may make global editing to audio segments. In other words, in the case that an audio segment is selected, the editing controls 342 to 348 do not perform global editing on the entire audio 114, but only perform global editing on the selected audio segment.

FIG. 6A illustrates a schematic diagram of performing a variable speed function for the audio segment 314 in FIG. 3I. As shown in FIG. 6A, with the second text segment 314 selected, the "speed change" control 346 is activated to accelerate processing of the second audio segment. Compared with the acoustic wave representation of the unaccelerated second audio segment, the acoustic wave representation of the accelerated second audio segment is rendered more compactly, and time length information 634 of the second audio segment is correspondingly updated to the accelerated time length, for example, "00: 09 -00: 34".

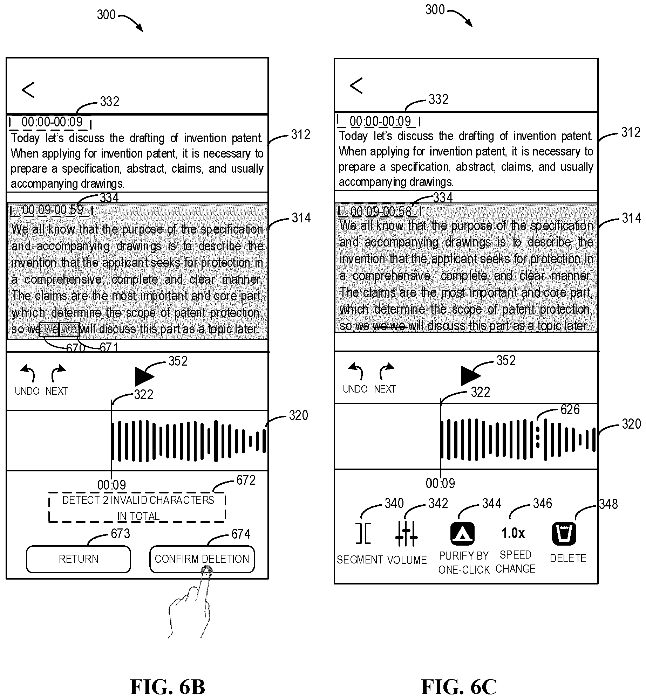

FIGs. 6B and 6C illustrate schematic diagrams of performing a function of deleting invalid characters for the second audio segment in FIG. 3I. In the example of FIG. 6B, the second area 314 is selected and the "purify by one-click" control 344 is activated. In this case, repeated characters 670 "we" and 671 "we" in the second text segment are identified as invalid characters and highlighted. Based on the identification result, prompt information 672 for invalid characters and user options, i.e., a return option 673 and a delete confirmation option 674, are presented on the user interface 300. As shown in FIG. 6B, the user selects the delete confirmation option 674.

In response to receiving the delete confirmation indication, the terminal device 110 deletes the audio unit corresponding to the invalid character from the second audio segment. As an example, as shown in FIG. 6C, in the second area 314, the invalid characters 670 and 671 are presented as being deleted from the second text segment (e.g., identified by a deletion line), and an acoustic wave representation 626 of the audio unit corresponding to the invalid character is presented as being removed from the acoustic wave representation of the second audio segment. Additionally, the time length information 334 of the truncated second audio segment, i.e., "00: 09 -00: 58", is presented in the second area 314.

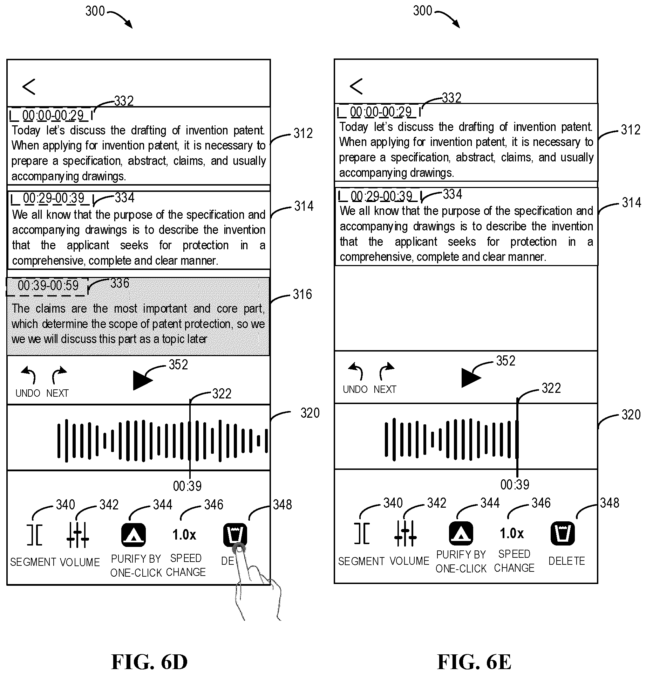

FIGs. 6D and 6E illustrate schematic diagrams of performing a delete function for the third audio segment in FIG. 3G. In the example of FIG. 6D, the third area 316 is selected and the "delete" control 348 is enabled. In response to receiving the delete indication, as shown in FIG. 6E, the third area 316 and the third text segment are deleted from the user interface 300. Accordingly, the acoustic wave representation of the third audio segment is also removed from the acoustic wave representation of the audio 114.

It should be understood that the interfaces and interactions shown in FIGs. 6A to 6E are merely illustrative, and various interface designs and interaction modes may actually exist. Respective graphical elements in the interface may have different arrangements and different visual representations, one or more of which may be omitted or replaced, and one or more other elements may also be present. Embodiments of the present disclosure are not limited in this regard.

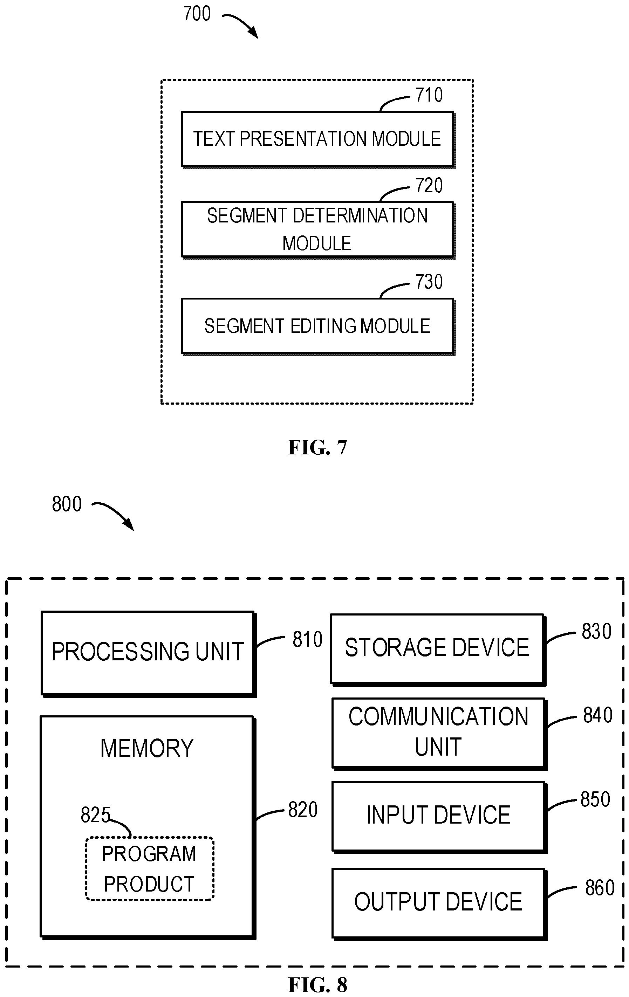

FIG. 7 illustrates a schematic structural block diagram of an apparatus 700 for editing audio according to some embodiments of the present disclosure. The apparatus 700 may be implemented as or included in the terminal device 110. The respective modules/components in the apparatus 700 may be implemented by hardware, software, firmware, or any combination thereof.

As shown, the apparatus 700 comprises a text presentation module 710 configured for presenting text corresponding to audio. The apparatus 700 further comprises a segment determination module 720 configured for, in response to detecting a first predetermined input for the text, determining a plurality of text segments of the text based on a first position associated with the first predetermined input. The apparatus 700 further comprises a segment editing module 730 configured for enabling segmentation editing of the audio based at least in part on the plurality of text segments.

In some embodiments, the apparatus 700 further comprises: a text independent presenting module configured for independently presenting a first text segment of the plurality of text segments in a first area of a user interface, the first text segment corresponding to a first audio segment in the audio, wherein the segment editing module is configured for editing the first audio segment based on an input for the first area.

In some embodiments, the segment editing module 730 comprises: an acoustic presenting module configured for presenting an acoustic wave representation corresponding to the first audio segment in response to receiving a selection of the first area.

In some embodiments, the segment editing module 730 comprises: a first edition enabling module configured for enabling an editing function for the first audio segment in response to receiving a selection of the first area.

In some embodiments, the segment editing module 730 comprises: a second edition enabling module configured for enabling an editing function for at least one audio segment of the audio in response to determining the plurality of text segments.

In some embodiments, the first predetermined input comprises at least one of: a long press, a single click, a double click, or a long press and drag gesture.

In some embodiments, the segment determination module 720 is configured for: in response to detecting a second predetermined input in addition to the first predetermined input, determining a first text segment, a second text segment, and a third text segment of the text based on the first position and a second position associated with the second predetermined input, wherein the second text segment is between the first text segment and the third text segment and is defined by the first position and the second position.

In some embodiments, the apparatus 700 further comprises: an inseparable position processing module configured for, in response to detecting a third predetermined input and determining that a third position associated with the third predetermined input is a position that is inseparable in the text, performing at least one of the following operations: presenting a prompt that the text cannot be divided, and disabling segmentation editing of the audio.

In some embodiments, the apparatus 700 further comprises: a text segment presenting module configured for presenting a first text segment of the plurality of text segments on a user interface; and an association recording module configured for recording an association between presentation positions of respective text units in the first text segment on the user interface and timestamps of corresponding respective audio units in the audio.

In some embodiments, the segment editing module 730 comprises: a first determination module configured for determining a first text unit corresponding to the first position in the first text segment; and a second determination module configured for determining a first timestamp in the audio for a first audio unit corresponding to the first text unit based on the presentation position of the first text unit and the recorded association, wherein the segment editing module is configured for performing segmentation editing on the audio according to the first timestamp.

FIG. 8 illustrates a block diagram of a computing device 800 in which one or more embodiments of the present disclosure may be implemented. It should be understood that the computing device 800 shown in FIG. 8 is merely exemplary and should not constitute any limitation on the functionality and scope of the embodiments described herein. The computing device 800 shown in FIG. 8 may be configured for implementing the terminal device 110 in FIG. 1.

As shown in FIG. 8, the computing device 800 is in the form of a general purpose computing device. Components of the computing device 800 may include, but are not limited to, one or more processors or processing units 810, a memory 820, a storage device 830, one or more communication units 840, one or more input devices 850, and one or more output devices 860. The processing unit 810 may be a physical or virtual processor and may execute various processing based on the programs stored in the memory 820. In a multi-processor system, a plurality of processing units executes computer-executable instructions in parallel to enhance parallel processing capability of the computing device 800.

The computing device 800 usually includes a plurality of computer storage mediums. Such mediums may be any attainable medium accessible by the computing device 800, including but not limited to, a volatile and non-volatile medium, a removable and non-removable medium. The memory 820 may be a volatile memory (e.g., a register, a cache, a Random Access Memory (RAM)), a non-volatile memory (such as, a Read-Only Memory (ROM), an Electrically Erasable Programmable Read-Only Memory (EEPROM), flash), or any combination thereof. The storage device 830 may be a removable or non-removable medium, and may include a machine-readable medium (e.g., a memory, a flash drive, a magnetic disk) or any other medium, which may be used for storing information and/or data (e.g., training data for training) and be accessed within the computing device 800.

The computing device 800 may further include additional removable/non-removable, volatile/non-volatile storage mediums. Although not shown in FIG. 8, there may be provided a disk drive for reading from or writing into a removable and non-volatile disk (e.g., "floppy disk") and an optical disc drive for reading from or writing into a removable and non-volatile optical disc. In such cases, each drive may be connected to a bus (not shown) via one or more data medium interfaces. The memory 820 may include a computer program product 825 having one or more program modules, and these program modules are configured for performing various methods or acts of various implementations of the present disclosure.

The communication unit 840 implements communication with another computing device via a communication medium. Additionally, functions of components of the computing device 800 may be realized by a single computing cluster or a plurality of computing machines, and these computing machines may communicate through communication connections. Therefore, the computing device 800 may operate in a networked environment using a logic connection to one or more other servers, a Personal Computer (PC) or a further general network node.

The input device 850 may be one or more various input devices, such as a mouse, a keyboard, a trackball, a voice-input device, and the like. The output device 860 may be one or more output devices, e.g., a display, a loudspeaker, a printer, and so on. The computing device 800 may also communicate through the communication unit 840 with one or more external devices (not shown) as required, where the external device, e.g., a storage device, a display device, and so on, communicates with one or more devices that enable users to interact with the computing device 800, or with any device (such as a network card, a modem, and the like) that enable the computing device 800 to communicate with one or more other computing devices. Such communication may be executed via an Input/Output (I/O) interface (not shown).

According to the example implementations of the present disclosure, a computer-readable storage medium is provided, on which computer-executable instructions are stored, wherein the computer-executable instructions are executed by a processor to implement the method described above. According to the example implementations of the present disclosure, a computer program product is further provided, which is tangibly stored on a non-transient computer-readable medium and includes computer-executable instructions, which are executed by a processor to implement the method described above. According to the example implementations of the present disclosure, a computer program product is provided, storing a computer program thereon, the program, when executed by a processor, implementing the method described above.

Aspects of the present disclosure are described herein with reference to flowchart illustrations and/or block diagrams of methods, apparatus (systems), and computer program products according to implementations of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various implementations of the present disclosure have been presented for purposes of illustration, but are not intended to be exhaustive or limited to implementations disclosed. Many modifications and variations will be apparent to those of ordinary skill in the art without departing from the scope and spirit of the described implementations. The terminology used herein was chosen to best explain the principles of implementations, the practical application or technical improvement over technologies found in the marketplace, or to enable others of ordinary skill in the art to understand implementations disclosed herein.

## Claims

1. A method for editing audio, comprising:
presenting text corresponding to the audio;
in response to detecting a first predetermined input for the text, determining a plurality of text segments of the text based on a first position associated with the first predetermined input; and
enabling segmentation editing of the audio based at least in part on the plurality of text segments.

2. The method of claim 1, further comprising:
separately presenting a first text segment of the plurality of text segments in a first area of a user interface, the first text segment corresponding to a first audio segment in the audio,
wherein enabling the segmentation editing of the audio comprises: editing the first audio segment based on an input for the first area.

3. The method of claim 2, wherein editing the first audio segment based on the input for the first area comprises:
presenting an acoustic wave representation corresponding to the first audio segment in response to receiving a selection of the first area.

4. The method of claim 2, wherein editing the first audio segment based on the input for the first area comprises:
enabling an editing function for the first audio segment in response to receiving a selection of the first area.

5. The method of claim 1, wherein enabling the segmentation editing of the audio comprises:
enabling an editing function for at least one audio segment of the audio in response to the determination of the plurality of text segments.

6. The method of claim 1, wherein the first predetermined input comprises at least one of: a long press, a single click, a double click, or a long press and drag gesture.

7. The method of claim 1, wherein determining the plurality of text segments of the text comprises:
in response to detecting a second predetermined input in addition to the first predetermined input, determining a first text segment, a second text segment, and a third text segment of the text based on the first position and a second position associated with the second predetermined input,
wherein the second text segment is between the first text segment and the third text segment and is defined by the first position and the second position.

8. The method of claim 1, further comprising:
in response to detecting a third predetermined input and determining that a third position associated with the third predetermined input is a position that is inseparable in the text, performing at least one of the following operations:
presenting a prompt that the text cannot be divided, and
disabling the segmentation editing of the audio.

9. The method of claim 1, further comprising:
presenting a first text segment of the plurality of text segments on a user interface; and
recording an association between presentation positions of respective text units in the first text segment on the user interface and timestamps of corresponding respective audio units in the audio.

10. The method of claim 9, wherein enabling the segmentation editing of the audio comprises:
determining a first text unit corresponding to the first position in the first text segment;
determining a first timestamp in the audio for a first audio unit corresponding to the first text unit based on the presentation position of the first text unit and the recorded association; and
performing the segmentation editing on the audio according to the first timestamp.

11. An apparatus for editing audio, comprising:
a text presentation module configured for presenting text corresponding to audio;
a segment determination module configured for, in response to detecting a first predetermined input for the text, determining a plurality of text segments of the text based on a first position associated with the first predetermined input; and
a segment editing module configured for enabling segmentation editing of the audio based at least in part on the plurality of text segments.

12. The apparatus of claim 11, wherein the apparatus comprises:
a text separate presenting module configured for separately presenting a first text segment of the plurality of text segments in a first area of a user interface, the first text segment corresponding to a first audio segment in the audio,
wherein the segment editing module is configured for editing the first audio segment based on an input for the first area.

13. The apparatus of claim 12, wherein the segment editing module comprises:
a first edition enabling module configured for enabling an editing function for the first audio segment in response to receiving a selection of the first area.

14. The apparatus of claim 11, wherein the segment editing module comprises:
a second edition enabling module configured for enabling an editing function for at least one audio segment of the audio in response to the determination of the plurality of text segments.

15. The apparatus of claim 11, wherein the segment determination module is configured for: in response to detecting a second predetermined input in addition to the first predetermined input, determining a first text segment, a second text segment, and a third text segment of the text based on the first position and a second position associated with the second predetermined input,
wherein the second text segment is between the first text segment and the third text segment and is defined by the first position and the second position.

16. The apparatus of claim 11, further comprising:
an inseparable position processing module configured for, in response to detecting a third predetermined input and determining that a third position associated with the third predetermined input is a position that is inseparable in the text, performing at least one of the following operations:
presenting a prompt that the text cannot be divided, and
disabling segmentation editing of the audio.

17. The apparatus of claim 11, wherein the apparatus further comprises:
a text segment presentation module configured for presenting a first text segment of the plurality of text segments on a user interface; and
an association recording module configured for recording an association between presentation positions of respective text units in the first text segment on the user interface and timestamps of corresponding respective audio units in the audio.

18. The apparatus of claim 17, wherein the segment editing module comprises:
a first determination module configured for determining a first text unit corresponding to the first position in the first text segment; and
a second determination module configured for determining a first timestamp in the audio for a first audio unit corresponding to the first text unit based on the presentation position of the first text unit and the recorded association,
wherein the segment editing module is configured for performing the segmentation editing on the audio according to the first timestamp.

19. An electronic device, comprising:
at least one processing unit; and
at least one memory coupled to the at least one processing unit and storing instructions executed by the at least one processing unit, the instructions, when executed by the at least one processing unit, causing the electronic device to perform a method according to any of claims 1 to 10.

20. A computer-readable storage medium having a computer program stored thereon, the computer program, when executed by a processor, implementing a method according to any of claims 1 to 10.
